# EUROPEAN PATENT APPLICATION

(11) **EP 3 057 274 A1**
(43) Date of publication of application: **17.08.2016**
(21) Application number: 13895250.2
(22) Date of filing: 07.10.2013
(51) Int. Cl.: H04L 12/859, H04L 12/865, H04L 12/875

(54) **METHOD AND SYSTEM FOR DEFINING THE ORDER IN WHICH WEB RESOURCES ARE OBTAINED BY A WEB BROWSER**

(71) Applicant: Telefonica Digital España, S.L.U., 28013 Madrid (ES)
(72) Inventor: YANG, Xiaoyuan, E-08019 Barcelona (ES); GUIJARRO GUILLEN, David, E-08019 Barcelona (ES)
(74) Representative: Herrero & Asociados, S.L.
(86) International application number: PCT/ES2013/070691
(87) International publication number: WO 2015/052354

(57) **Abstract**

Present invention refers to a method for defining the browser fetching order of web resources. The method comprises: receiving in an intermediate node an HTTP request, included in a first uniform resource locator, for a web resource sent by a web browser; assigning a priority level to the HTTP request by the intermediate node; encoding the priority level and the HTTP request in a second uniform resource locator; and sending the second uniform resource locator as an HTTP-redirection response to the web browser, so the fetching order is defined. Present invention also refers to a system for defining the browser fetching order of web resources characterized by an intermediate node configured for redirecting the HTTP request to the web browser before letting the HTTP request reach the HTTP server, being the intermediate node configured for perform the previous steps.

## Description

### TECHNICAL FIELD OF THE INVENTION

Present invention generally relates to web browsing in the Internet and more specifically to a method for assigning load priorities to the elements of a web reordering by means of controlled redirections the normal fetching order of web resources optimizing and improving the browsing experience without blocking any connection.

### BACKGROUND OF THE INVENTION

Web browsing is becoming a daily activity for a majority of the world population. The speed and smoothness of the browsing experience is clearly a goal that benefits both the users and the publishers.

Each user of the Internet accesses to web pages through a web browser, which allows users to access to contents hosted in servers. When a user requests a web page, an HTTP request is sent by the web browser to an HTTP server which processes said request. The HTTP returns an HTTP response to the browser, which evaluates the response and starts rendering the content requested. Additional web resources included in the requested web page entail additional requests to the server until eventually the browser is able to render the whole web page.

A server can be accessed by multiple users at the same time and one problem is that it does not have protection mechanism against excessive load conditions. In order to save time and resources, a web cache is often used. A web cache offers a temporary storage of web documents, such as HTML pages and images. Copies of the documents passing through the web cache are kept, thus next requests may be satisfied from the cache instead of the origin server. Web caches are used in several systems as search engines, web servers/web applications or web browsers.

However, and particularly in a mobile setting, nowadays the reality of web browsing is still far from being optimal. There are several issues to be taken under consideration.

Content from a web comes in an order that might not be the right one for the device rendering it, for instance, a small mobile screen does not render anything until the end because it has taken a lot of time downloading content that cannot be seen because it is out of the visible area.

Ads, specifically from third party publishers, take longer to load and block more relevant (from the publisher ---and maybe also the user-- point of view) content.

Blocking content may entail some drawbacks. For instance, ad blockers might kill a web via reducing its income, but on the other hand, blocking content is meaningful when, for instance, contents cannot be rendered in the requesting device.

Summarizing, a proper load order of the elements of a web, with optional blocking, seems to be a reasonable solution for those problems. The right order might depend on the web itself, on the device the user has and even on the particular request.

There are solutions in the prior art that reorder the loading of elements via modifying the content (the html request). These methods require content tampering and may fall in legal issues regarding the ownership of the content. Therefore, they only apply when there is an agreement between the parts: content publisher, content owners and acceleration solution providers. One of such is the patent US8112471 B2, which comprises a system for optimizing the performance of a website which includes a traffic management system redirecting HTTP request and applying optimization techniques to the redirected HTTP requests and the HTTP responses. For example detecting viewport content or changing the content to a mobile version.

Otherfamilies of techniques use throttling in the server side, via delaying the response of the lower priority elements. As it has been already mentioned, these have the problem of keeping browser connections blocked and avoid parallel downloads affecting negatively overall performance.

There are also techniques to reorder requests where the priority comes explicitly in the original request and other systems which have a limited number of levels, as in US6742016B1**,** where it is disclosed a system for handling incoming requests in a server application. It is included a session manager assigning a level of priority to the requests and it is also controlled the number of simultaneous requests sent. Less priority requests are stored.

On the other hand, there are mechanisms for web acceleration for mobiles that consist on designing a mobile specific web. Those, while being nearly optimal in providing a fast browsing experience, often sacrifice the content (the mobile version of the web is less attractive) and/or are expensive to initially build and maintain.

For all the reasons exposed before, it is missing in the prior art a method to assign load priorities to all elements of a web, which it is not bounded to any agreement between parts, but it is totally non- intrusive and transparent for browser and publisher.

### SUMMARY OF THE INVENTION

Present invention solves the aforementioned problems by presenting a transparent and nonintrusive method to define the browser fetching order of web resources. The method comprises the steps of:
a) receiving in an intermediate node an HTTP request, included in a first uniform resource locator, for a web resource sent by a web browser;
b) assigning a priority level to the HTTP request by the intermediate node;
c) encoding the priority level and the HTTP request in a second uniform resource locator;
d) sending the second uniform resource locator as an HTTP-redirection response to the web browser;

Thus, the fetching order of web resources is controlled according to the natural requirement of current browsers, which request the resources of a web using a queue where the redirections are inserted at the end of the queue. This condition allows that, inserting redirections in a controlled way reorders the normal fetching order.

In one embodiment of the invention, it is received in the intermediate node an HTTP request for a web resource with a priority level sent by the web browser; then if the priority level is lower than a maximum value defined previously, the HTTP request is modified by increasing the priority level; the modified HTTP request is modified and encoded in a third uniform resource locator; and finally the third uniform resource locator is sent as a second HTTP-redirection response to the web browser. When the priority level reaches a maximum value defined previously, the invention may comprise sending the HTTP request to an origin server or a web cache to fetch the web resource.

According to a particular embodiment of the invention, the intermediate node may be configured to implement delays to a set of domains. And the priority level may be implemented inserting a string to the HTTP request which encodes a delay with an original host, providing an uniform resource locator using an HTTP response code 303.

The maximum value of the priority level may correspond, according to one embodiment, to a minimum delay, that is a null delay. On the contrary, a null priority according to said embodiment corresponds to an infinity delay, which makes an HTTP request be rejected at the intermediate node.

Another aspect of the invention refers to a system for defining the browser fetching order of web resources comprising a web browser sending an HTTP request to an HTTP server, the system is characterized by an intermediate node configured for redirecting the HTTP request to the web browser before letting the HTTP request reach the HTTP server, being the intermediate node configured for:
- receiving an HTTP request, included in a first uniform resource locator, for a web resource sent by the web browser;
- assigning a priority level to the HTTP request;
- encoding the priority level and the HTTP request in a second uniform resource locator;
- sending the second uniform resource locator as an HTTP-redirection response to the web browser;

The system of the invention may comprise, according to some embodiments, the intermediate node further configured for receiving in the intermediate node an HTTP request for a web resource with a priority level sent by the web browser; if the priority level is lower than a maximum value defined previously, modifying the HTTP request by increasing the priority level; encoding the modified HTTP request in a third uniform resource locator; and sending the third uniform resource locator as a second HTTP-redirection response to the web browser.

Optionally, the intermediate node may be further configured to implement delays to a set of domains. And, according to some embodiments of the invention, the intermediate node may insert a string into the HTTP request, which encodes a delay according to the priority level and with an original host, providing an uniform resource locator using an HTTP response code 303.

The intermediate node is an HTTP proxy-cache server in some embodiments of the invention.

A last aspect of the invention refers to a computer program product comprising computer program code adapted to perform the method of the invention, when said program code is executed on a computer, a digital signal processor, a field-programmable gate array, an application-specific integrated circuit, a micro-processor, a micro-controller, or any other form of programmable hardware.

The invention applies to all web sites without restricting the content type they provide. Furthermore, it is transparent because there is no need for the provider to design web site in any special way, and the content is not transformed at all. Said transparency also provides a direct advantage with respect to alternative solutions of the prior art, because it is not required any agreement with content owners nor providers.

Also the inactivity of the connections are minimized by present invention, compared to any standard throttling based technique, while reordering the actual download of the content. And a further advantage is that proposed invention is dynamic: the order of delay levels can be changed over time, either using an automatic system of by human intervention.

### DESCRIPTION OF THE DRAWINGS

To complete the description that is being made and with the object of assisting in a better understanding of the characteristics of the invention, in accordance with a preferred example of practical embodiment thereof, accompanying said description as an integral part thereof, is a set of drawings wherein, by way of illustration and not restrictively, the following has been represented:

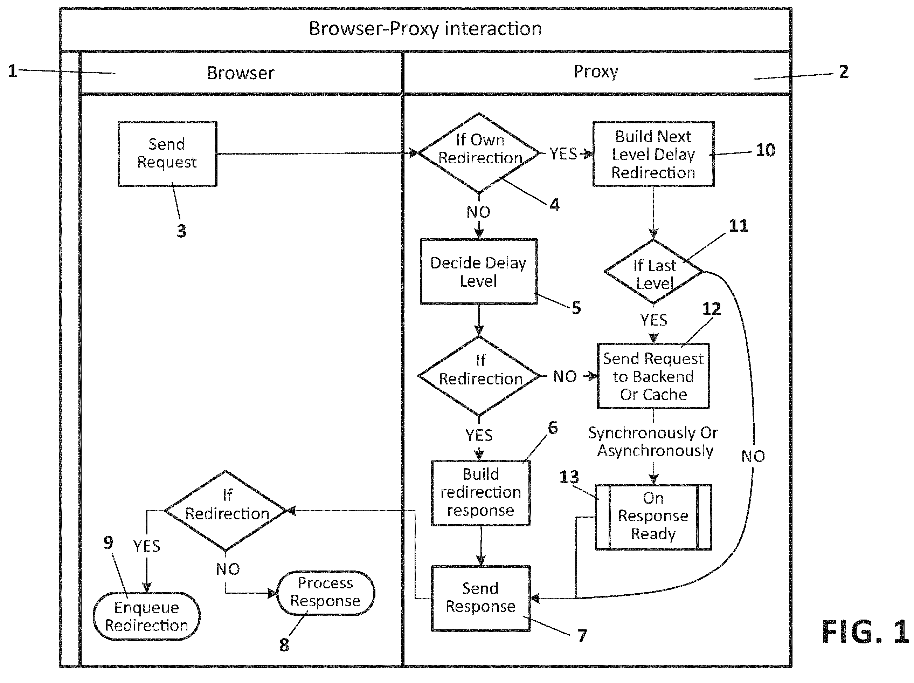

**Figure 1****.-** shows a block diagram of the interaction between a browser and a proxy according to one embodiment of the invention.

### DETAILED DESCRIPTION OF THE INVENTION

The invention describes a process for, in general terms, assigning load priorities to all elements of a web. According to a preferred embodiment of the invention, the prioritization is achieved by means of a system consisting on a flexible http-proxy that can be configured to implement arbitrary delays in accesses to a set of domains. But not any delay method would work, for instance, a delay in the proxy response would block all remaining content and misuse a browser connection. It is presented a browser friendly embodiment below of how to use a delay method of the proposed invention.

Current browsers request the resources of a web using a queue where the redirections are inserted at the end of the queue. This is a natural requirement that all current browsers satisfy. With this condition, redirections introduced in a controlled way transform delays into priorities and hence obtaining the desired reordering of resource downloading, therefore, the insertion of delays is a key element in this preferred embodiment to reorder the elements according to assigned priorities. HTTP redirections are used to transform depending on the delay wanted. For example, for delay 1 it is done one redirection, for delay 2 it is done 2 redirections, etc. And to manage blocking of requests, some embodiments provide an infinite delay level.

Present invention is based on an intermediate node which, according to one embodiment, it is implemented as a flexible HTTP-proxy-cache server intercepting all the connections or requests sent by a web browser to an origin server. This HTTP-proxy-cache server is able to divide the incoming requests in sets, depending solely on the value of a "host" header (the http header named 'host'). These sets correspond to the delay levels required (a set for no delay, a set for one level of delay, a set for two levels of delay and so on and so forth).

There are different actions to be applied for each set. The actions required by the present embodiments of the invention consist on a quick selection from the value of the path; responding with an http-redirect (http response codes 303) with a dynamic location header value that depends on the path of the incoming request; letting a request pass through and send it, with a path transformation, to the origin specified by the "host" header value.

Once a request arrives to the proxy, a configuration defined previously is selected using the host the request applies to and its path. The behavior is as follows:
- On the first time a request is intercepted by the http proxy-cache server, a delay level is set according to a priority level assigned using the configuration. This delay level is codified in a new uniform resource locator (url) that is sent as an http-redirection response to the web browser. In addition to the delay level, the original path is also encoded inside the new url. From this point all requests related to the original one will come with that codification containing both the delay level and the original path.
- When the http proxy-cache server receives an encoded request (this is already including an http request plus a priority level encoded as a delay level), it decodes both the path and the delay level. If the level is zero, the request is sent to its origin server, or its response is taken from the cache store, and responded in a standard way. Otherwise, the priority level is incremented (resulting in a decremented delay level), a new redirection is encoded, with the original path and the new delay level, and it is sent to the browser.

The method proposed by one embodiment of the present invention for building redirections consists on inserting, at the beginning of the request path, a string that encodes the delay level. The basic interaction between the browser and the proxy of said embodiment is schematically explained in Figure 1, where it is shown a transparent encoding method. When the web browser (1) sends a request (3) to the proxy (2), the proxy parses said request and search for a redirection (4). If the request is the first time arriving to the proxy, then a delay level is assigned according to the priority set during the configuration. An HTTP redirection response is built (6) and sent back (7) to the web browser, where the response may be directly processed (8) to fetch the web resource requested or it may be queue (9) as the rest of redirections. In the case of the request arriving the proxy contains a redirection, then it is built a next level delay redirection (10). If now the delay level is not the last level (11) the next step is already sending the response (7) to the web browser, as explained before. But if the level was indeed the last level, which it is a null delay for this embodiment but it may be implemented to be any other value, the next step is sending a HTTP request to the origin server or retrieving its response from the web cache (12) and finally, once the response is ready (13) (either from an origin or from the cache) it is sent to the browser (7).

Redirecting requests avoid manipulating anything else but the url of the destination of the redirection, that contains the host and the path of the new request. If also the hosts were manipulated, they would cause collisions with some other hosts out there in the Internet, so only manipulating the path is the most appropriate non-intrusive way.

However, the technique, according to different embodiments, could consist on any manipulation of the path that, somehow, can be inverted very fast. A simple and convenient way is inserting a prefix. For instance, a request with a path /requested-path.html, the web browser is redirected to /delayed-level-3/requested-path.html, using the Http response code 303, and providing the aforementioned url with the original host. Referring to the handling of delay levels with more detail, the proxy behaves as follows:
- for delay zero, the request is looked up in the cache, if there is a hit, then it is served, otherwise it is bypassed to the origin server;
- for delay N (with N > 0), the request is redirected (via configurable http-redirection) to a request of delay level N-1. This consists of building an http response with a request that is exactly as the incoming request but with a string prefixed to its path. This string codifies both the fact that is a delay and its level. Continuing with the previous example of delay level 3 assigned:
   - 1.: Incoming /mypath.html, assigned to delay level 3
   - 2.: Redirected to /delayed-level-3/mypath.html
   - 3.: Incoming /delayed-level-3/mypath.html, assigned to delay level 2
   - 4.: Redirected to /delayed-level-2/mypath.html
   - 5.: Incoming /delayed-level-2/mypath.html, assigned to delay level 1
   - 6.: Redirected to /delayed-level-1/mypath.html
   - 7.: Incoming /delayed-level-1/mypath.html, assigned to delay level 0
   - 8.: Redirected to /delayed-level-0/mypath.html
   - 9.: Incoming /delayed-level-0/mypath.html, bypassed to web cache or origin server.
- for infinite delay, the request is rejected.

## Claims

1. Method for defining the browser fetching order of web resources comprising
e) receiving in an intermediate node an HTTP request, included in a first uniform resource locator, for a web resource sent by a web browser;
f) assigning a priority level to the HTTP request by the intermediate node;
g) encoding the priority level and the HTTP request in a second uniform resource locator;
h) sending the second uniform resource locator as an HTTP-redirection response to the web browser;

2. Method according to claim 1 further comprising:
i) receiving in the intermediate node an HTTP request for a web resource with a priority level sent by the web browser;
j) if the priority level is lower than a maximum value defined previously, modifying the HTTP request by increasing the priority level;
k) encoding the modified HTTP request in a third uniform resource locator;
I) sending the third uniform resource locator as a second HTTP-redirection response to the web browser;

3. Method according to claim 2 wherein the priority level is equal to a maximum value defined previously, further comprising sending the HTTP request to an origin server or a web cache to fetch the web resource.

4. Method according to previous claims wherein the intermediate node is configured to implement delays to a set of domains.

5. Method according to previous claims wherein the priority level is implemented inserting a string to the HTTP request which encodes a delay with an original host, providing an uniform resource locator using an HTTP response code 303.

6. Method according to claims 4-5 wherein the delay is set according to the priority level, being the maximum value defined previously equal to a null delay.

7. Method according to claim 6 wherein a null priority level correspond to a infinite delay, which makes an HTTP request be rejected at the intermediate node.

8. System for defining the browser fetching order of web resources comprising a web browser sending an HTTP request to an HTTP server, the system is **characterized by** an intermediate node configured for redirecting the HTTP request to the web browser before letting the HTTP request reach the HTTP server, being the intermediate node configured for:
- receiving an HTTP request, included in a first uniform resource locator, for a web resource sent by the web browser;
- assigning a priority level to the HTTP request;
- encoding the priority level and the HTTP request in a second uniform resource locator;
- sending the second uniform resource locator as an HTTP-redirection response to the web browser;

9. System according to claim 8 wherein the intermediate node is further configured for:
- receiving in the intermediate node an HTTP request for a web resource with a priority level sent by the web browser;
- if the priority level is lower than a maximum value defined previously, modifying the HTTP request by increasing the priority level;
- encoding the modified HTTP request in a third uniform resource locator;
- sending the third uniform resource locator as a second HTTP-redirection response to the web browser;

10. System according to claims 8-9 wherein the intermediate node is further configured to implement delays to a set of domains.

11. System according to any one of claims 8-10 wherein the intermediate node is further configured to insert a string into the HTTP request, which encodes a delay according to the priority level and with an original host, providing an uniform resource locator using an HTTP response code 303.

12. System according to any one of claims 8-11 wherein the intermediate node is an HTTP proxy-cache server.

13. Computer program product comprising computer program code adapted to perform the method according to any of the claims 1-8 when said program code is executed on a computer, a digital signal processor, a field-programmable gate array, an application-specific integrated circuit, a micro-processor, a micro-controller, or any other form of programmable hardware.
